# EUROPÄISCHE PATENTSCHRIFT

(11) **EP 2 795 876 B1**
(45) Veröffentlichungstag und Bekanntmachung des Hinweises auf die Patenterteilung: **18.11.2015**
(21) Anmeldenummer: 12798221.3
(22) Anmeldetag: 22.11.2012
(51) Int. Cl.: H04L 29/08, H04L 29/06, G05B 19/418, G06F 13/42, H04L 7/00, G06F 1/32, G08B 21/18

(54) **SYNCHRONE DATENÜBERTRAGUNGSEINRICHTUNG**
SYNCHRONOUS DATA TRANSMISSION DEVICE
DISPOSITIF DE TRANSMISSION DE DONNÉES SYNCHRONE

(30) Priorität: 21.12.2011 DE 102011089428
(43) Veröffentlichungstag der Anmeldung: 29.10.2014
(73) Patentinhaber: Endress+Hauser GmbH+Co. KG, 79689 Maulburg (DE)
(72) Erfinder: WEIBEL, Mathieu, 46143 Greenwood, IN (US); KLINK, Martin, 79291 Merdingen (DE); MÜLLER, Christian, 79599 Wittlingen (DE)
(74) Vertreter: Andres, Angelika Maria
(86) Internationale Anmeldenummer: PCT/EP2012/073349
(87) Internationale Veröffentlichungsnummer: WO 2013/092101

(56) Entgegenhaltungen:
- EP-A2- 1 553 731
- US-A- 5 748 569
- US-A1- 2011 255 560

## Beschreibung

Die Erfindung betrifft eine synchrone Datenübertragungseinrichtung zur Übertragung von Daten zwischen zwei Kommunikationspartnern, von denen einer als Sender und einer als Empfänger dient, mit einem Taktgeber, der einen Sendetakt mit einer vorgegebenen Sendetaktrate erzeugt, und einer Übertragungseinrichtung, die die Daten wiedergebende Datensignale mit der vorgegebenen Sendetaktrate vom Sender zum Empfänger überträgt, und die den Sendetakt vom Sender zum Empfänger überträgt.

Synchrone Datenübertragungseinrichtungen werden in einer Vielzahl verschiedener Einsatzgebiete verwendet. Ein Beispiel hierfür sind Messgeräte, die mindestens zwei über eine synchrone Datenübertragungseinrichtung mit einander verbundene Messgerätkomponenten, wie z.B. eine mit einer Bedienoberfläche des Messgeräts verbundene Messelektronik oder einen mit einer übergeordnete Messelektronik verbundenen Sensor, aufweisen.

Die synchrone Datenübertragung zeichnet sich dadurch aus, dass Sender und Empfänger anhand des parallel zum Datensignal vom Sender zum Empfänger übertragenen Sendetakts synchronisiert werden. Hierdurch wird empfängerseitig eine zeitrichtige Erfassung des Datensignals ermöglicht.

Die Druckschrift EP 1553731 zeigt solch ein synchrones Datenübertragungsverfahren.

Insb. in Verbindung mit den oben genannten Messgeräten können senderseitig plötzlich auftretende Ereignisse, wie z.B. ein Absinken einer dort zur Verfügung stehenden Versorgungsleistung, empfängerseitig ein schnelles Handeln erfordern. So kann beispielsweise bei einem plötzlichen Einbrechen der Versorgungsleistung ein schnelles Abschalten oder Herunterfahren nicht zwingend benötigter Messgerätkomponenten Datenverlusten oder Datenkorrumpierungen vorbeugen.

Dementsprechend ist es erforderlich, die Information über ein derartiges senderseitig aufgetretenes kritisches Ereignis möglichst schnell an den Empfänger zu übertragen, damit dieser die entsprechenden Aktionen so schnell wie möglich selbst ausführen oder deren Ausführung veranlassen kann.

Dabei tritt das Problem auf, dass vom Sender zu sendende Daten seriell verarbeitet und gesendet werden. Dementsprechend vergeht wertvolle Zeit, bis ein das kritische Ereignis wiedergebendes Datensignal generiert, in die bereits zur Versendung vorgesehenen Daten eingereiht, und versendet werden kann.

Darüber hinaus können während der Übertragung der Information über das kritische Ereignis keine anderen Daten übertragen werden. Das kann bei einem Einbruch der Energieversorgung eines Messgeräts zur Folge haben, dass die zuletzt ermittelten Messwerte, die vielleicht sogar Aufschluss über die Ursache des eingetretenen kritischen Ereignisses geben könnten, unwiederbringlich verloren gehen.

Es ist eine Aufgabe der Erfindung eine synchrone Datenübertragungs-einrichtung anzugeben, die in der Lage ist, eine Information über ein senderseitig auftretendes Ereignis möglichst schnell an den Empfänger zu übertragen.

Hierzu besteht die Erfindung in einer Datenübertragungseinrichtung zur synchronen Übertragung von Daten zwischen zwei Kommunikationspartnern, von denen einer als Sender und einer als Empfänger dient, mit
- einem Ereignismonitor, der ein senderseitiges Auftreten mindestens eines vorgegebenen Ereignisses überwacht, und beim Auftreten eines dieser Ereignisse das auftretende Ereignis während seines Auftretens als senderseitig auftretendes Ereignis anzeigt,
- einem an den Ereignismonitor angeschlossenen Taktgeber mit einstellbarer Taktfrequenz, der einen Sendetakt mit einer Sendetaktrate erzeugt, die während des Auftretens eines der Ereignisse gleich einer dem auftretenden Ereignis zugeordneten ereignis-spezifischen Sendetaktrate und während eines ereignis-freien Zeitraums gleich einer von allen ereignis-spezifischen Sendetaktraten verschiedenen Grundtaktrate ist,
- einer Übertragungseinrichtung,
   -- die den zu senden Daten entsprechende Datensignale mit der Sendetaktrate vom Sender zum Empfänger überträgt, und
   -- die den Sendetakt vom Sender zum Empfänger überträgt, und
- einer empfängerseitig an die Übertragungseinrichtung angeschlossenen Ereigniserkennungseinrichtung, die anhand der Sendetaktrate des Sendetakts ein senderseitiges Auftreten eines der Ereignisse erkennt, und bei dessen Auftreten das Ereignis bestimmt und ausgibt.

Gemäß einer Weiterbildung der Erfindung ist an die Ereigniserkennungseinrichtung eine Vorrichtung zur Ausführung mindestens einer einem der überwachten Ereignisse zugeordneten Aktion angeschlossen, die eine insb. automatische Ausführung der Aktion bewirkt, sobald die Ereigniserkennungseinrichtung das Auftreten des zugehörigen Ereignisses ausgibt.

Gemäß einer weiteren Weiterbildung der Erfindung
- können senderseitig mehrere der überwachten Ereignisse gleichzeitig auftreten,
- ist eine Ereignishierarchie vorgegeben, in der die einzelnen möglichen Ereignisse entsprechend ihrer Relevanz eingestuft sind, und
- zeigt der Ereignismonitor beim gleichzeitigen Auftreten mehrerer der Ereignisse dasjenige Ereignis als aufgetretenes Ereignis an, dem gemäß der Ereignishierarchie die höchste Relevanz zukommt.

Gemäß einer weiteren Weiterbildung sind der Ereignismonitor, der Taktgeber und die Ereigniserkennungseinrichtung in jedem der beiden Kommunikationspartner vorgesehen, und es wird in jedem der beiden Kommunikationspartner ein dortiges Auftreten mindestens eines für den jeweiligen Kommunikationspartner vorgegebenen Ereignisses überwacht, und bei dessen Auftreten vom jeweiligen Ereignismonitor erkannt und über die Übertragungseinrichtung zum jeweils anderen Kommunikationspartner übertragen.

Die Erfindung weist den Vorteil auf, dass die Information über ein senderseitig auftretendes Ereignis über die in Abhängigkeit vom aufgetretenen Ereignis eingestellte Sendetaktrate unmittelbar zum Empfänger übertragen wird. Es braucht insb. nicht abgewartet zu werden bis zuvor bereits für die Versendung vorgesehene Daten übertragen wurden.

Darüber hinaus weist sie den Vorteil auf, dass die reguläre Datenübertragung während der Übertragung der Ereignisinformation unverzögert parallel weiter läuft. Eine Unterbrechung der regulären Datenübertragung ist somit nicht erforderlich.

Die Erfindung und weitere Vorteile werden nun anhand der Figuren der Zeichnung, in der ein Ausführungsbeispiel dargestellt ist, näher erläutert.
- Fig. 1 zeigt:: eine bidirektionale synchrone Datenübertragungseinrichtung; und
- Fig. 2 zeigt:: ein Beispiel von über die synchrone Datenübertragungseinrichtung von Fig. 1 übertragenen Sendetakten und Datensignalen.

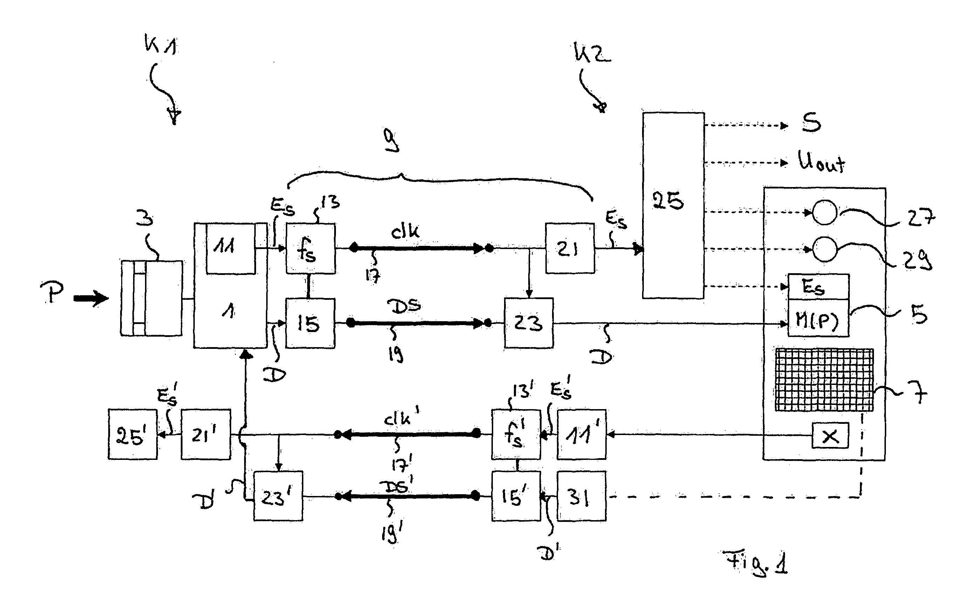

Fig. 1 zeigt ein Blockschaltbild einer erfindungsgemäßen synchronen Datenübertragungseinrichtung zur Übertragung von Daten D zwischen zwei Kommunikationspartnern K1, K2, von denen einer als Sender und einer als Empfänger dient.

Die erfindungsgemäße Datenübertragungseinrichtung kann als unidirektionale Datenübertragungseinrichtung ausgebildet sein, bei der einer der Kommunikationspartner K1, K2 permanent als Sender dient, während der andere permanent als Empfänger dient. Alternativ kann sie, wie in dem hier dargestellten Ausführungsbeispiel dargestellt, als bidirektionale Datenübertragungseinrichtung ausgebildet sein.

Die beiden Kommunikationspartner K1, K2 sind in dem dargestellten Ausführungsbeispiel zwei Komponenten eines Messgeräts. Der erste Kommunikationspartner K1 umfasst eine Messelektronik 1, an die eine Messeinrichtung 3 zur Erfassung einer Messgröße, hier eines auf die Messeinrichtung 3 einwirkenden Drucks P, angeschlossen ist. Der zweite Kommunikationspartner K2 ist in dem dargestellten Ausführungsbeispiel eine Benutzeroberfläche des Messgeräts mit einem Anzeigefeld 5 zur Anzeige der Messwerte M(P) des gemessenen Drucks P und einem Bedienfeld 7, über das ein Benutzer dem Messgerät beispielsweise für die Inbetriebnahme des Messgeräts von diesem benötigte Informationen oder einen gewünschten Messbereich vorgeben kann.

Die beiden Kommunikationspartner K1, K2 sind über eine Übertragungseinrichtung 9 miteinander verbunden, über die Daten D vom jeweiligen Sender zum jeweiligen Empfänger übertragen werden.

Die nachfolgende Beschreibung der Erfindung erfolgt nun zunächst anhand eines Übertragungsbeispiels, bei dem der erste Kommunikationspartner K1 als Sender und der zweite Kommunikationspartner K2 als Empfänger dient.

Dabei werden vorab senderseitig möglicherweise auftretende messtechnisch erfassbare verschiedene Ereignisse E vorgegeben, deren Auftreten im ersten Kommunikationspartner K1 überwacht werden soll.

So kann im vorliegenden Beispiel beispielsweise eine Störung der Messeinrichtung 3 als ein Ereignis E1, und ein Absinken einer für die Energieversorgung des ersten Kommunikationspartners K1, insb. der Messelektronik 1, benötigten Eingangsleistung unter einen vorgegebenen Schwellwert als ein weiteres Ereignis E2 vorgegeben werden.

Erfindungsgemäß ist senderseitig ein Ereignismonitor 11 vorgesehen, der überwacht, ob eines der vorgegebenen Ereignisse E eintritt. Tritt eines der vorgegebenen Ereignisse E ein, so wird dies vom Ereignismonitor 11 erkannt und als senderseitig aufgetretenes Ereignis Es anzeigt.

Hierzu sollten die vorgegebenen Ereignisse E echt verschieden sein, damit zu jeder Zeit höchstens eines der erfassbaren Ereignisse E vorliegen kann. Ist das nicht möglich, kann eine Ereignishierarchie vorgegeben werden, in der die Ereignisse E nach deren Relevanz eingestuft werden. Sollten nun zwei oder mehr Ereignisse E gleichzeitig auftreten, erkennt der Ereignismonitor 11 dies, und zeigt dasjenige Ereignis E als aufgetretenes Ereignis Es an, dem gemäß der Ereignishierarchie die höchste Relevanz zukommt.

Der Ereignismonitor 11 kann als Teil der Messelektronik 1 ausgebildet sein, die hierzu mit entsprechend ausgebildeten Überwachungseinrichtungen ausgestattet ist.

Eine Störung der Messeinrichtung 3 kann zum Beispiel durch eine Kurzschlussüberwachung oder anhand einer Überwachung eines für Messsignale der Messeinrichtung 3 vorgegebenen Sollwertbereichs erfolgen.

Ein Absinken der Energieversorgung unter den vorgegebenen Schwellwert kann beispielsweise über eine mit einer für die Energieversorgung maßgeblichen Eingangsspannung gespeisten Komparatorschaltung erfolgen.

Erfindungsgemäß ist ein Taktgeber 13 mit einstellbarer Taktfrequenz vorgesehen, der im Datenübertragungsbetrieb einen Sendetakt clk mit einer in Abhängigkeit von den vom Ereignismonitor 11 angezeigten Ereignissen E vorgegebenen Sendetaktrate f_{S} erzeugt. Dabei ist jedem einzelnen möglichen überwachten Ereignis E, hier den Ereignissen E1 und E2, jeweils eine andere ereignis-spezifische Sendetaktrate f_{E1}, f_{E2} zugeordnet. Zeigt der Ereignismonitor 11 kein Ereignis E an, so gibt der Taktgeber 13 einen Sendetakt clk mit einer als Grundtaktrate f₀ vorgegebenen von den ereignis-spezifischen Sendetaktraten f_{E1}, f_{E2} verschiedenen Sendetaktrate f_{S} aus.

Der Taktgeber 13 ist hierzu in der ersten Kommunikationseinrichtung K1 unmittelbar an den Ereignismonitor 11 angeschlossen, der die ereignis-abhängige Einstellung der Sendetaktrate f_{S} des vom Taktgeber 13 zu generierenden Sendetakts clk über eine entsprechende Steuerleitung bewirkt.

Im regulären Datenübertragungsbetrieb vom Sender zum Empfänger zu übertragende Daten D umfassen beispielsweise von der Messelektronik 1 anhand der Messsignale der Messeinrichtung 3 abgeleitete Messwerte M(P).

Sie werden einer an den Taktgeber 13 angeschlossenen Datenausgabeeinrichtung 15 zugeführt, die die Daten D wiedergebende Datensignale DS mit der in Abhängigkeit von den vom Ereignismonitor 11 angezeigten Ereignissen E vorgegebenen Sendetaktrate f_{S} ausgibt.

Die die beiden Kommunikationspartner K1, K2 miteinander verbindende Übertragungseinrichtung 9 umfasst eine an den senderseitig vorgesehenen Taktgeber 13 angeschlossene erste Taktleitung 17, über die der ereignis-abhängige Sendetakt clk vom Sender zum Empfänger übertragen wird. Parallel dazu umfasst sie eine an die senderseitige Datenausgabeeinrichtung 15 angeschlossene erste Datenleitung 19, über die die Datensignale DS vom Sender zum Empfänger übertragen werden.

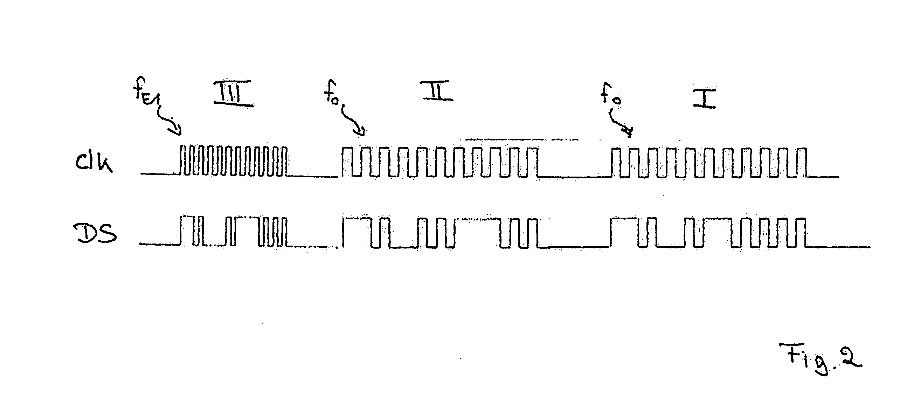

Fig. 2 zeigt ein Signalbeispiel hierzu, in dem oben ein Beispiel eines zeitlichen Verlaufs eines über die erste Taktleitung 17 übertragenen Sendetakts clk und darunter ein Beispiel eines zeitlichen Verlaufs eines parallel dazu über die erste Datenleitung 19 übertragenen Datensignals DS dargestellt ist. Das Signalbeispiel umfasst drei aufeinander folgende Übertragungsperioden I, II, III. in denen jeweils ein Datensatz übertragen wurde. Während der beiden ersten Übertragungsperioden I, II wurde vom Ereignismonitor 11 kein Ereignis E erkannt. Dementsprechend erfolgt die Übertragung hier mit der dem Grundtakt entsprechenden Sendetaktrate f_{S}=f₀. Vor der Beginn der dritten Übertragungsperiode wurde vom Ereignismonitor 11 das Ereignis E1 erkannt und angezeigt. Dementsprechend erfolgt die Übertragung während der dritten Übertragungsperiode III mit der dem aufgetretenen Ereignis E1 zugeordneten hier höheren ereignis-spezifischen Sendetaktrate f_{E1}.

Empfängerseitig ist eine Zustandserkennungseinrichtung 21 vorgesehen, die anhand der in Abhängigkeit von den vom Ereignismonitor 11 angezeigten Ereignissen E eingestellten Sendetaktrate f_{S} feststellt, ob senderseitig eines der Ereignisse E aufgetreten ist. Ist das der Fall bestimmt sie anhand der in dem Fall ereignis-spezifischen Sendetaktrate f_{S} das aufgetretene Ereignis E_{S} und gibt es aus. Die Zustandserkennungseinrichtung 21 ist hierzu empfängerseitig an die erste Taktleitung 17 angeschlossen.
Darüber hinaus ist empfängerseitig eine sowohl an die erste Taktleitung 17 als auch an die erste Datenleitung 19 angeschlossene Datenempfangseinrichtung 23 vorgesehen, die mittels einer über den Sendetakt clk mit dem Sender synchronisierte Abtastung der eingehenden Datensignale DS die empfangenen Daten D ableitet und ihrer bestimmungsgemäßen Verwendung zuführt. So können beispielsweise übertragen Messwerte M(P) in dem hierzu an die Datenempfangseinrichtung 23 angeschlossenen Anzeigefeld 5 der Bedienoberfläche angezeigt werden.

Damit ist es erstmals möglich die Information über ein senderseitig plötzlich auftretendes Ereignis Eₛ unmittelbar, ohne eine durch die Datenübertragungsform bedingte Verzögerung, an den Empfänger weiter zu geben. Dabei wird die über die gleiche Übertragungseinrichtung 9 erfolgende reguläre Datenübertragung weder unterbrochen, noch verzögert.

Vorzugsweise ist an die Ereigniserkennungseinrichtung 21 im Empfänger eine Vorrichtung 25 zur Ausführung mindestens einer einem der möglichen Ereignisse E1, E2 zugeordneten Aktion angeschlossen. Diese bewirkt eine vorzugsweise automatische Ausführung der jeweiligen Aktion bewirkt, sobald die Ereigniserkennungseinrichtung 21 das Auftreten des jeweiligen zugehörigen Ereignisses E1, E2 ausgibt.

Tritt senderseitig das Ereignis E1 der einbrechenden Energieversorgung auf, so kann die zugeordnete Aktion beispielsweise darin bestehen, über entsprechende von der Vorrichtung 25 auszugebende Steuerbefehle S einen Notfallbetriebsmodus einzuleiten, in dem beispielsweise weitere - hier nicht dargestellte - für den Notbetrieb nicht zwingend erforderlichen Komponenten des Messgeräts heruntergefahren oder ausgeschaltet werden.

Zusätzlich oder alternativ hierzu können den einzelnen Ereignissen E weitere Aktionen zugeordnet werden. So kann das Auftreten eines bestimmten Ereignisses E dem Benutzer beispielsweise durch ein Einschalten einer vorzugsweise farblich oder durch deren räumliche Anordnung auf der Benutzeroberfläche dem Ereignis E zugewiesene Leuchtdiode 27 angezeigt werden. Alternativ oder zusätzlich kann eine Anzeige ' E_{S}' des senderseitig aufgetretenen Ereignisses E_{S} im Anzeigefeld 5, die Ausgabe eines akustischen Signals oder Alarms, oder die Ausgabe eines dem aufgetretenen Ereignis E_{S} entsprechenden elektrischen Ausgangssignals Uₒᵤₜ bewirkt werden.

Tritt senderseitig keines der überwachten Ereignisse E ein, so ist in der Regel keine Aktion erforderlich. Grundsätzlich kann aber auch hier eine Aktion, wie zum Beispiel ein Einschalten einer dem Benutzer den ereignis-freien Betrieb anzeigenden beispielsweise grünen Leuchtdiode 29 vorgesehen werden.

Die erfindungsgemäße zeitgleiche Übertragung von Datensignal DS und Ereignisinformation kann natürlich auf identische Weise zusätzlich auch in umgekehrter Richtung vorgesehen werden. In dem Fall werden in beiden Kommunikationspartnern K1, K2 dort gegebenenfalls auftretende vorgegebene Ereignisse E, E' überwacht und deren Auftreten zeitgleich mit der regulären Datenübertragung zum jeweils anderen Kommunikationspartner K2, K1 übertragen.

Hierzu ist auch im zweiten Kommunikationspartner K2 ein Ereignismonitor 11', ein Taktgeber 13' zur Erzeugung eines Sendetakts clk' mit einer in Abhängigkeit von den vom Ereignismonitor 11' angezeigten Ereignissen E' vorgegebenen Sendetaktrate f_{S}', und eine an eine Datenquelle 31 angeschlossene Datenausgabeeinrichtung 15' vorzusehen. Die zu übertragenden Daten D' umfassen hier beispielsweise über das Bedienfeld 7 eingegebene Informationen. Ein Beispiel für ein mögliches zu überwachendes Ereignis E1' ist hier eine über eine Eingabe im Bedienfeld 7 geforderte Notfall-Abschaltung des Messgeräts. Dies ist in Fig. 1 durch die mit X gekennzeichnete Taste im Bedienfeld 7 symbolisch angedeutet.

In der Übertragungseinrichtung 9 ist eine zweite Taktleitung 17' vorgesehen, über die der im zweiten Kommunikationspartners K2 generierte, die in Abhängigkeit von den vom Ereignismonitor 11' angezeigten Ereignissen E_{S}' des zweiten Kommunikationspartners K2 vorgegebene Sendetaktrate f_{S}' aufweisende Sendetakt clk', zum ersten Kommunikationspartner K1 übertragen wird.

Darüber hinaus ist eine zweite Datenleitung 19' zur Übertragung der von der Datenausgabeeinrichtung 15' mit der Sendetaktrate f_{S}' ausgegebenen Datensignale DS' zum ersten Kommunikationspartner K1 vorzusehen.

Auch im ersten Kommunikationspartner K1 werden der eingehende Sendetakt clk' und die eingehenden Datensignale DS' einer Datenempfangseinrichtung 23' zugeführt, die hieraus die empfangenen Daten D' ableitet, und beispielsweise der Messelektronik 1 zur Auswertung oder Umsetzung zuführt.

Im ersten Kommunikationspartner K1 ist ebenfalls eine an die zweite Taktleitung 17' angeschlossene Ereigniserkennungseinrichtung 21' vorzusehen, die anhand der Sendetaktrate f_{S}' des Sendetakts clk' das im zweiten Kommunikationspartner K2 gegebenenfalls aufgetretene Ereignis E_{S}' erkennt und ausgibt. Darüber hinaus kann auch hier eine Vorrichtung 25' an die Ereigniserkennungseinrichtung 21' angeschlossen sein, die automatisch eine dem jeweils aufgetretenen Ereignis E' zugeordnete Aktion ausführt.

Während auch hier bei ereignis-freiem Betrieb keine Aktion erforderlich ist, werden beim Vorliegen des durch die geforderte Notausschaltung vorliegenden Ereignisses E₁' alle Komponenten des ersten Kommunikationspartners K1 ausgeschaltet.

Soweit eine Überwachung von im zweiten Kommunikationspartner K2 möglicher Weise auftretenden Ereignissen E', und deren schnelle Übertragung zum ersten Kommunikationspartner K1 nicht erforderlich ist, kann hier natürlich auf die hierfür erforderlichen zusätzlichen Bauteile verzichtet, und die synchrone Datenübertragung vom zweiten zum ersten Kommunikationspartner K2, K1 auf herkömmliche Weise ausgeführt werden.
- 1: Messelektronik
- 3: Messeinrichtung
- 5: Anzeigefeld
- 7: Bedienfeld
- 9: Übertragungseinrichtung
- 11, 11': Ereignismonitor
- 13, 13': Taktgeber
- 15, 15': Datenausgabeeinrichtung
- 17, 17': Taktleitung
- 19, 19': Datenleitung
- 21, 21': Ereigniserkennungseinrichtung
- 23, 23': Datenempfangseinrichtung
- 25, 25': Vorrichtung zur Ausführung mindestens einer Aktion
- 27: Leuchtdiode
- 29: Leuchtdiode
- 31: Datenquelle

## Patentansprüche

1. Datenübertragungseinrichtung zur synchronen Übertragung von Daten (D, D') zwischen zwei Kommunikationspartnern (K1, K2), von denen einer als Sender und einer als Empfänger dient, mit
- einem Ereignismonitor (11, 11'), der ein senderseitiges Auftreten mindestens eines vorgegebenen Ereignisses (E) überwacht, und beim Auftreten eines dieser Ereignisse (E) das auftretende Ereignis während seines Auftretens als senderseitig auftretendes Ereignis (E_{S}, E_{S}') anzeigt,
- einem an den Ereignismonitor (11, 11') angeschlossenen Taktgeber (13, 13') mit einstellbarer Taktfrequenz, der einen Sendetakt (clk, clk') mit einer Sendetaktrate (f_{S}, f_{S}') erzeugt, die während des Auftretens eines der Ereignisse (E, E') gleich einer dem auftretenden Ereignis (E_{S}, E_{S}') zugeordneten ereignis-spezifischen Sendetaktrate (f_{E1}, f_{E2}, f_{E1}') und während eines ereignis-freien Zeitraums gleich einer von allen ereignis-spezifischen Sendetaktraten (f_{E1}, f_{E2}, f_{E1}') verschiedenen Grundtaktrate (f₀) ist,
- einer Übertragungseinrichtung (9),
-- die den zu senden Daten (D, D') entsprechende Datensignale (DS, DS') mit der Sendetaktrate (f_{S}, f_{S}') vom Sender zum Empfänger überträgt, und
-- die den Sendetakt (clk, clk') vom Sender zum Empfänger überträgt, und
- einer empfängerseitig an die Übertragungseinrichtung (9) angeschlossenen Ereigniserkennungseinrichtung (21, 21'), die anhand der Sendetaktrate (f_{S}, f_{S}') des Sendetakts (clk, clk') ein senderseitiges Auftreten eines der Ereignisse (E, E') erkennt, und bei dessen Auftreten das Ereignis (E_{S}, E_{S}') bestimmt und ausgibt.

2. Datenübertragungseinrichtung nach Anspruch 1, mit einer an die Ereigniserkennungseinrichtung (21, 21') angeschlossenen Vorrichtung (25, 25') zur Ausführung mindestens einer einem der überwachten Ereignisse (E, E') zugeordneten Aktion, die eine insb. automatische Ausführung der Aktion bewirkt, sobald die Ereigniserkennungseinrichtung (21, 21') das Auftreten des zugehörigen Ereignisses (E₁, E₂, E₁') ausgibt.

3. Datenübertragungseinrichtung nach Anspruch 1, bei der
- senderseitig mehrere der überwachten Ereignisse (E) gleichzeitig auftreten können,
- eine Ereignishierarchie vorgegeben ist, in der die einzelnen möglichen Ereignisse (E) entsprechend ihrer Relevanz eingestuft sind, und
- der Ereignismonitor (11) beim gleichzeitigen Auftreten mehrer der Ereignisse (E) dasjenige Ereignis (E) als aufgetretenes Ereignis (E_{S}) anzeigt, dem gemäß der Ereignishierarchie die höchste Relevanz zukommt.

4. Datenübertragungseinrichtung nach Anspruch 1, bei der der Ereignismonitor (11, 11'), der Taktgeber (13, 13') und die Ereigniserkennungseinrichtung (21, 21') in jedem der beiden Kommunikationspartner (K1, K2) vorgesehen sind, und in jedem der beiden Kommunikationspartner (K1, K2) ein dortiges Auftreten mindestens eines für den jeweiligen Kommunikationspartner (K1, K2) vorgegebenen Ereignisses (E, E') überwacht, und bei dessen Auftreten vom jeweiligen Ereignismonitor (11, 11') erkannt und über die Übertragungseinrichtung zum jeweils anderen Kommunikationspartner (K2, K1) übertragen wird.

## Claims

1. Data transmission unit for the synchronous transmission of data (D, D') between two communication partners (K1, K2), of which one acts as the sender and one as the receiver, with
- an event monitor (11, 11'), which monitors the occurrence of at least one predefined event (E) on the sender side, and in the event that one of these events occurs, displays the event as an event occurring on the sender side (Eₛ, Eₛ') during the occurrence of the event,
- a clock (13, 13') connected to the event monitor (11, 11') with an adjustable clock frequency, which generates a transmission clock (clk, clk') with a transmission clock rate (fₛ, fₛ'), which, while one of the events (E, E') occurs, is equal to an event-specific transmission clock rate (f_{E1}, f_{E2}, f_{E1'}) which is assigned to the event (Eₛ, Eₛ') that occurs, and, during an event-free period, is equal to a base clock rate (f₀) which is different to all the event-specific transmission clock rates (f_{E1}, f_{E2}, f_{E1'}),
- a transmission unit (9),
-- which transmits the data signals (DS, DS') corresponding to the data to be sent (D, D'), with the transmission clock rate (fₛ, f_{s'}) from the sender to the receiver, and
-- which transmits the transmission clock (clk, clk') from the sender to the receiver, and
- an event detection unit (21, 21') connected to the transmission unit (9) on the receiver side, which detects an occurrence of one of the events (E, E') on the sender side using the transmission clock rate (fₛ, fₛ') of the transmission clock (clk, clk'), and determines and outputs the event (Eₛ, Eₛ') when the event occurs.

2. Data transmission unit as claimed in Claim 1, with a unit (25, 25') which is connected to the event detection unit (21, 21') and is designed to carry out at least one action assigned to one of the monitored events (E, E'), which effectuates, in particular, an automatic execution of the action as soon as the event detection unit (21, 21') indicates the occurrence of the corresponding event (E₁, E₂, E₁').

3. Data transmission unit as claimed in Claim 1, wherein
- several of the monitored events (E) can occur simultaneously on the sender side,
- an event hierarchy is predefined in which the individual possible events (E) are categorized by importance, and
- should several events (E) occur simultaneously, the event monitor (11) displays the event (E) which is assigned the highest importance in the event hierarchy as the event that has occurred (Eₛ).

4. Data transmission unit as claimed in Claim 1, wherein the event monitor (11, 11'), the clock (13, 13') and the event detection unit (21, 21') are provided in each of the two communication partners (K1, K2), and in each of the two communication partners (K1, K2) monitors an occurrence of at least one event (E, E') predefined for the specific communication partner (K1, K2) and, if the event occurs, the event is identified by the event monitor in question (11, 11') and transmitted to the other respective communication partner (K2, K1) via the transmission unit.

## Revendications

1. Dispositif de transmission de données destiné à la transmission synchrone de données (D, D') entre deux partenaires de communication (K1, K2), parmi lesquels un sert d'émetteur et un sert de récepteur, avec
- un moniteur d'événement (11, 11'), qui surveille une apparition côté émetteur d'au moins un événement (E) prédéfini, et en cas d'apparition d'un de ces événements (E), affiche l'événement survenant pendant son apparition en tant qu'événement (Eₛ, Eₛ') apparaissant côté émetteur,
- un synchroniseur (13, 13') raccordé au moniteur d'événement (11, 11'), avec une fréquence d'horloge réglable, qui génère une horloge d'émission (clk, clk') avec un rythme d'horloge d'émission (fₛ, fₛ'), qui pendant l'apparition d'un des événements (E, E') est égal à un rythme d'horloge d'émission (f_{E1}, f_{E2}, f_{E1'}) spécifique à l'événement, attribué à l'événement (Eₛ, Eₛ') apparaissant, et pendant une période exempte d'événements, est égal à un rythme d'horloge de base (f₀) différent de tous les rythmes d'horloge d'émission (f_{E1}, f_{E2}, f_{E1'}) spécifiques aux événements,
- un dispositif de transmission (9),
-- qui transmet les signaux de données (DS, DS') correspondant aux données (D, D') à émettre, avec le rythme d'horloge d'émission (fₛ, f_{s'}) de l'émetteur au récepteur, et
-- qui transmet l'horloge d'émission (clk, clk') de l'émetteur au récepteur, et
- un dispositif d'identification d'événements (21, 21') raccordé côté récepteur au dispositif de transmission (9), lequel dispositif d'identification identifie au moyen du rythme d'horloge d'émission (fₛ, fₛ') de l'horloge d'émission (clk, clk') une apparition côté émetteur d'un des événements (E, E'), et détermine et indique l'événement (Eₛ, Eₛ') lors de son apparition.

2. Dispositif de transmission de données selon la revendication 1, avec un dispositif (25, 25') raccordé au dispositif d'identification d'événements (21, 21'), destiné à l'exécution d'au moins l'une des actions attribuée à l'un des événements (E, E') surveillés, qui provoque notamment une exécution automatique de l'action sitôt que le dispositif d'identification d'événements (21, 21') indique l'apparition de l'événement (E₁, E₂, E₁') correspondant.

3. Dispositif de transmission de données selon la revendication 1, pour lequel
- plusieurs parmi les événements (E) surveillés peuvent apparaître simultanément côté émetteur,
- est prédéfinie une hiérarchie d'événements, au sein de laquelle les différents événements (E) possibles sont classés en fonction de leur importance, et
- le moniteur d'événements (11) affiche en tant qu'événement (Eₛ) survenu, en cas d'apparition simultanée de plusieurs des événements, l'événement (E) auquel est attribué l'importance la plus élevée conformément à la hiérarchie d'événements.

4. Dispositif de transmission de données selon la revendication 1, pour lequel le moniteur d'événements (11, 11'), le synchroniseur (13, 13') et le dispositif d'identification d'événements (21, 21') sont prévus dans chacun des deux partenaires de communication (K1, K2), et qui surveille dans chacun des deux partenaires de communication (K1, K2) une apparition d'au moins un événement (E, E') prédéfini pour le partenaire de communication (K1, K2) respectif et, lors de son apparition, est identifié par le moniteur d'événements (11, 11') et transmis par l'intermédiaire du dispositif de transmission respectivement à l'autre partenaire de communication (K2, K1).
